# DEMANDE DE BREVET EUROPEEN

(11) **EP 2 083 608 A1**
(43) Date de publication de la demande: **29.07.2009**
(21) Numéro de dépôt: 09300002.4
(22) Date de dépôt: 21.01.2009
(51) Int. Cl.: H05B 6/12

(54) **Appareil de cuisson par induction**

(30) Priorité: 28.01.2008 FR 0850496
(71) Demandeur: Jaeger Controls, 28002 Chartres Cedex (FR)
(72) Inventeur: Akel, Dominique, 75016 Paris (FR); Lomp, Stéphane, 28300 Bercheres St Germain (FR); Gaspard, Jean-Yves, 69400 Gleize (FR)
(74) Mandataire: Herrburger, Pierre

(57) **Abrégé**

Appareil de cuisson par induction à au moins un foyer, le foyer comprenant une surface de cuisson formée par une plaque recevant le récipient, au moins un inducteur installé sous la plaque, un générateur alimentant l'inducteur en courant alternatif à haute fréquence et un écran électroconducteur non magnétique, interposé entre l'inducteur et la surface de cuisson.

L'écran électrique, électroconducteur, non magnétique est une structure digitée (102) a des branches dont les extrémités sont libres et non reliées en boucle, cette structure couvrant la surface de l'inducteur (101), est munie d'une patte reliée (105) à la masse électrique (110) de la plaque de cuisson (100).

## Description

### Domaine de l'invention

La présente invention concerne un appareil de cuisson par induction à au moins un foyer selon le préambule de la revendication 1.

### Etat de la technique

Les appareils de cuisson à induction encore appelés plaques de cuisson du type défini ci-dessus, comporte un ou plusieurs foyer(s) c'est-à-dire un ou plusieurs emplacements permettant de recevoir un ustensile de cuisson tel qu'un récipient, casserole ou autre dont le fond et les parois seront chauffés par le courant induit par l'inducteur. Les ustensiles de cuisson ont des caractéristiques magnétiques pour permettre ce couplage.

Mais un tel appareil de cuisson à induction génère des perturbations électromagnétiques à l'extérieur de l'ustensile.

Différentes solutions ont été envisagées pour réduire ces perturbations. C'est ainsi qu'il existe un foyer multi-inducteur en parallèle et en opposition de phase pour réduire ou éliminer ces perturbations dans l'axe principal du foyer. Il est également connu d'inverser le sens du bobinage à l'extérieur de l'inducteur pour avoir un courant en sens inverse de celui de la partie interne de l'inducteur et compenser plus ou moins efficacement les perturbations.

Une autre solution proposée consiste à entourer l'inducteur d'un bouclier amagnétique sous forme de cage pour réfléchir les perturbations et essayer de les contenir.

Il est également connu de connecter un élément conducteur amagnétique au courant par le circuit résonnant du générateur et du filtre.

Une autre solution consiste à intégrer à l'inducteur, une capacité pour dissiper les perturbations (US 6 956688 B2).

Une autre solution proposée consiste à superposer deux inducteurs avec des courants circulant dans des directions opposées.

Ces diverses solutions réduisent plus ou moins fortement les perturbations électromagnétiques mais il subsiste un effet parasite au niveau de l'ustensile du fait que l'inducteur, la plaque de cuisson, l'ustensile constituent un condensateur.

En effet l'inducteur d'un foyer à induction situé à proximité de l'ustensile à chauffer a une surface en regard de la casserole. Cette surface importante est proportionnelle à la surface en regard de l'inducteur et de la casserole. Le condensateur ainsi formé a une capacité de quelques dizaines de picofarads (pF). Ce condensateur se charge par la tension alternative impliquée entre l'inducteur et la casserole cette dernière étant isolée électriquement par la plaque formant la surface de cuisson. La casserole constituant la seconde plaque du condensateur se charge ainsi à une tension qui peut atteindre plusieurs dizaines de volts. Cette tension est perçue lorsqu'on touche la casserole, sous la forme d'une petite décharge. Bien que cette décharge ne soit pas en elle-même dangereuse elle est néanmoins gênante et perturbatrice. Une personne avertie ne sera pas surprise par cette décharge, mais une personne non avertie risque de l'être et de faire un geste brusque qui peut devenir dangereux du fait que l'ustensile tel que la casserole peut contenir des produits chauffés par exemple un liquide qui peut être renversé ou blesser par brûlure.

En outre, comme le bouclier magnétique est formé d'une boucle, on accentue l'effet de couronne, c'est-à-dire la ligne d'échauffement maximum car les lignes de champs magnétique convergent vers la zone d'échauffement maximum qui est concentrique à un inducteur circulaire.

### But de l'invention

La présente invention a pour but de développer un appareil de cuisson par induction permettant de réduire fortement voire d'éliminer la tension parasite d'un ustensile de cuisson placée sur la surface de cuisson d'un appareil de cuisson par induction sans altérer les performances du foyer ni créer un élément s'échauffant fortement ni encore augmenter l'effet de couronne, et cela avec des moyens simples et économiques, intégrés à l'appareil de cuisson.

### Exposé et avantages de l'invention

A cet effet la présente invention concerne un appareil de cuisson par induction du type défini ci-dessus caractérisé par les caractéristiques de la première revendication.

L'écran électrique, c'est-à-dire électroconducteur mais non magnétique permet de transférer la puissance électrique de l'inducteur à l'ustensile de cuisine placé sur la surface de cuisson tout en évitant que l'ustensile de cuisson ne constitue un condensateur avec l'inducteur. Ce condensateur est remplacé par celui formé par l'écran placé au-dessus de l'inducteur et dans tous les cas dans l'intervalle entre l'inducteur et l'ustensile de cuisson. Ce condensateur se charge prioritairement au condensateur qui est formé par l'écran et l'ustensile de cuisson et grâce à sa structure digitée sans former de boucle, réduit considérablement l'effet de couronne et donc la puissance perdue.

En fait, le condensateur formé par l'ustensile et l'écran ne peut se charger puisque l'écran est relié à la masse électrique de l'appareil de cuisson qui est en général le châssis de l'appareil.

L'écran électrique selon l'invention qui a une structure digitée, c'est-à-dire un ensemble de doigts ou de branches dont une extrémité est libre et l'autre est reliée à une partie commune elle-même reliée à la masse, est réalisée de façon particulièrement intéressante sous une forme de peigne, c'est-à-dire un dos portant des dents notamment parallèles mais ne constituant en aucun cas une boucle.

Les dents et le dos du peigne qui sont constituées par des rubans parallèles, couvrent régulièrement la surface de l'inducteur à la manière d'une grille sans créer de boucles dans lesquelles pourrait circuler un courant électrique. Cette structure de l'écran électroconducteur est facile à réaliser, notamment si elle est en aluminium, qui a l'avantage d'être bon conducteur, non magnétique et léger ce qui réduit encore plus l'échauffement.

Suivant une caractéristique avantageuse, l'écran électrique est formé de deux peignes jumelés par leurs dos, parallèles, et dont une extrémité est reliée à une patte commune, mise à la masse, les dents des peignes étant dirigées dans des directions opposées.

Cet écran électroconducteur formé de deux peignes jumelés ainsi assemblés, à l'avantage de pouvoir bien se fixer à la masse par les deux peignes reliés chacun séparément à la masse, tout en assurant une bonne couverture de la surface de l'induit en restant très perméable au rayonnement électromagnétique de l'inducteur.

Suivant une autre caractéristique avantageuse, l'écran électrique est formé de deux peignes jumelés dont les extrémités des dents sont tournées les unes vers les autres, sans contact et le dos de chaque peigne comporte une patte reliée séparément à la masse.

Cette autre forme de réalisation d'un écran à deux peignes jumelés convient tout particulièrement pour un appareil de cuisson dont le point de cuisson est constitué par quatre inducteurs combinés et, en particulier, des inducteurs carrés, facilitant la réalisation modulaire des appareils de cuisson. Cette réalisation à quatre inducteurs est également envisageable avec des peignes jumelés, dont les dents sont opposées.

Suivant une autre caractéristique avantageuse, l'écran électrique est formé d'un sous-ensemble collé, composé de la structure digitée appliquée sur un isolant thermique et couverte d'un isolant électrique.

Ce sous-ensemble collé constitue une partie d'un appareil de cuisson au même titre que l'inducteur et les autres éléments, permettant une fabrication séparée pour l'assemblage de l'appareil de cuisson. Ce sous-ensemble est également avantageux pour une construction modulaire de l'appareil de cuisson, pour son adaptation à différentes tailles et différentes puissances.

En particulier, le sous-ensemble collé tel que défini ci-dessus est caractérisé en ce que l'isolant thermique est un carton réfractaire, notamment un stratifié de papier et de mica, imprégné de silicone ayant une résistance thermique jusqu'à 700°C et une bonne découpabilité.

Suivant une autre caractéristique avantageuse, l'écran électrique est en aluminium d'une épaisseur de 150 microns ou en carbone ou en une peinture électroconductrice mais non magnétique L'écran en aluminium peut être fixé de préférence sous la plaque formant la surface de cuisson. Il peut également être intégré dans la masse de la plaque ou être fixé sur le dessus de la plaque en étant noyé dans la surface supérieure.

Dans le cas d'un écran en carbone, celui-ci est réalisé de préférence par sérigraphie sur un support et notamment la face inférieure de la plaque de cuisson ou sur ou dans sa surface supérieure. L'écran en carbone est relié, comme l'écran en aluminium, ou en une autre matière électro-conductrice mais non magnétique, par une liaison électrique à la masse électrique de l'appareil de cuisson.

L'appareil de cuisson selon l'invention se réalise dans des conditions très simples et économiques, de façon comparable à un appareil de cuisson qui ne comporte pas un tel écran électrique.

### Dessins

La présente invention sera décrite ci-après de manière plus détaillée à l'aide d'exemples de réalisation de l'invention représentés dans les dessins annexés dans lesquels :
- la figure 1 est une vue en coupe schématique d'un appareil de cuisson selon l'invention,
- la figure 2 est une vue en plan d'une première forme d'écran électrique de l'appareil de cuisson selon l'invention,
- la figure 3 est une vue en plan d'une autre forme d'écran selon l'invention,
- la figure 4 est une vue en coupe d'un sous-ensemble formé d'un écran selon l'invention,
- la figure 5 est une vue en plan d'un sous-ensemble comprenant un écran formé de l'assemblage de deux écrans selon la figure 2,
- la figure 6 est un sous-ensemble formé d'un écran selon la figure 3,
- la figure 7 est une vue en plan d'un foyer d'un appareil de cuisson selon l'invention avec un écran selon la figure 5,
- la figure 7A est une vue en coupe schématique de l'appareil de cuisson de la figure 7,
- la figure 8 est une vue en plan analogue à celle de la figure 7, d'un appareil de cuisson avec un écran selon la figure 8,
- la figure 9 est une vue éclatée schématique d'un appareil de cuisson selon la figure 8 avec un premier mode de réalisation d'un écran,
- la figure 10 est une vue analogue à la figure 9 avec un second mode de réalisation de l'écran.

### Description de modes de réalisation préférentiels de l'invention

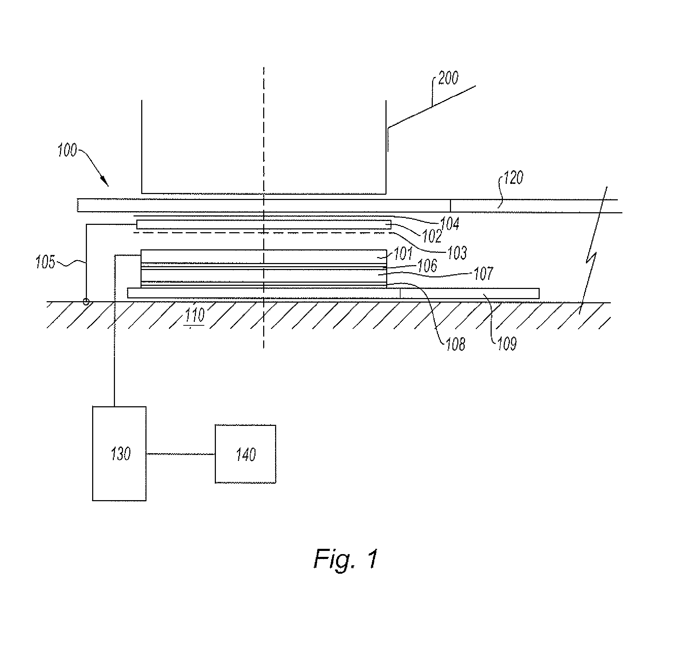

La figure 1 montre schématiquement et de façon partielle un appareil de cuisson par induction. La représentation est limitée à un foyer 100 de cet appareil qui peut en comporter plusieurs, notamment sous forme modulaire.

L'appareil de cuisson 100 est composé d'un châssis 110 portant une plaque 120 formant la surface de cuisson sur laquelle on dispose un ustensile 200, par exemple une casserole. Le foyer 100 est formé d'un inducteur 101 placé sous la plaque 120 et séparé de celle-ci par un ensemble composé d'un écran électrique ayant une structure digitée 102 dont les doigts ou les branches ont une extrémité libre et l'autre, reliée à une partie commune elle-même reliée à la masse. La structure ou écran 102 est au-dessus d'une couche d'isolation thermique 103 et surmonté d'une couche d'isolation électrique 104. L'écran électrique 102 et les deux couches 103, 104 constituent, de préférence, un sous-ensemble assemblé par collage.

L'écran électrique 102 est relié au châssis 110 par une liaison électrique 105, le châssis constituant la masse.

L'inducteur 101 est placé avec interposition d'un isolant électrique 106 au-dessus de ferrites 107 et l'ensemble est porté par un circuit imprimé 109 assurant l'alimentation électrique de l'inducteur 101 séparé des ferrites 107 par un isolant électrique 108. Le générateur 130 alimentant le circuit imprimé est représenté par un rectangle.

L'inducteur 101 présenté schématiquement peut être composé de plusieurs parties dont l'alimentation par le générateur 130 est commandée en fonction de la puissance demandée selon les dimensions de l'ustensile de cuisson placé au-dessus ou de la charge à chauffer.

Ces différents paramètres sont pris en compte automatiquement ou sont commandés manuellement par des moyens de commande 140 agissant sur le générateur 130 et le programme de fonctionnement de l'appareil de cuisson. Ces moyens connus ne sont pas représentés ici de manière détaillée.

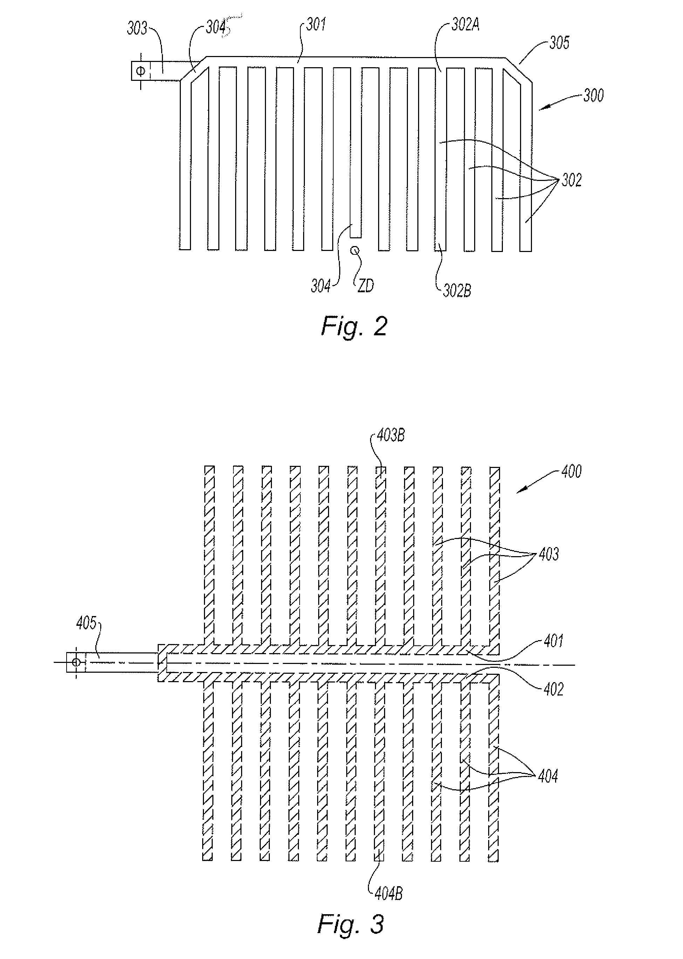

Selon un premier mode de réalisation (figure 2), l'écran électrique 100, électroconducteur, non magnétique est constitué par une structure digitée plane en aluminium, en forme de grille ou, plus exactement, de peigne 300 comprenant un dos 301 portant des dents 302 dont une extrémité 302A est reliée au dos 301 ; l'autre extrémité 302B étant libre. Ces dents 302 et le dos 301 sont formés par des rubans, parallèles pour les dents, et couvrant régulièrement une certaine surface. Le dos 301 est relié à une patte 303 pour le branchement au châssis 110 pour la liaison à la masse.

Les dents 302 sont, de préférence, de même longueur sauf l'une des dents 304, laissant une partie dégagée ZD pour constituer un point de fixation du sous-ensemble de l'écran électrique. Les coins 304, 305 de l'écran, aux deux extrémités du dos 301 et des branches sont tronqués pour s'adapter à la forme particulière du foyer.

Le peigne 300 constitue avec ses dents un ensemble de branches conductrices 302 formant une plaque de condensateur. Mais ces branches ne sont pas bouclées de sorte qu'il ne peut y avoir de circulation de courant électrique en boucle.

La figure 3 décrit un autre mode de réalisation d'un écran électrique 400 électroconducteur, non magnétique, qui peut être considéré comme constitué par l'assemblage schématique de deux formes de peigne comme celui de la figure 2, dos à dos. L'écran 400 se compose de deux branches principales 401, 402 parallèles et écartés et portant des dents ou branches 403, 404 dirigées dans des directions opposées, et parallèles entre elles.

Les dos ou branches principales 401, 402 sont reliés à une patte commune 405 pour la liaison à la masse.

La forme de peignes jumelés représentée à la figure 3 est une forme symétrique bien que d'autres formes, non symétriques, puissent être envisagées.

Cette forme de peignes jumelés ou, plus simplement, de peigne 400, ne constitue pas non plus de boucle fermée dans laquelle pourrait circuler le courant puisque toutes les dents 403, 404 se terminent par une extrémité libre 403B, 404B et les deux dos 401, 402 sont réunis à une seule extrémité et non aux deux extrémités.

Comme précédemment, les branches 401, 402, 403, 404 des dos et des dents sont formés de rubans parallèles, d'épaisseur de préférence identique.

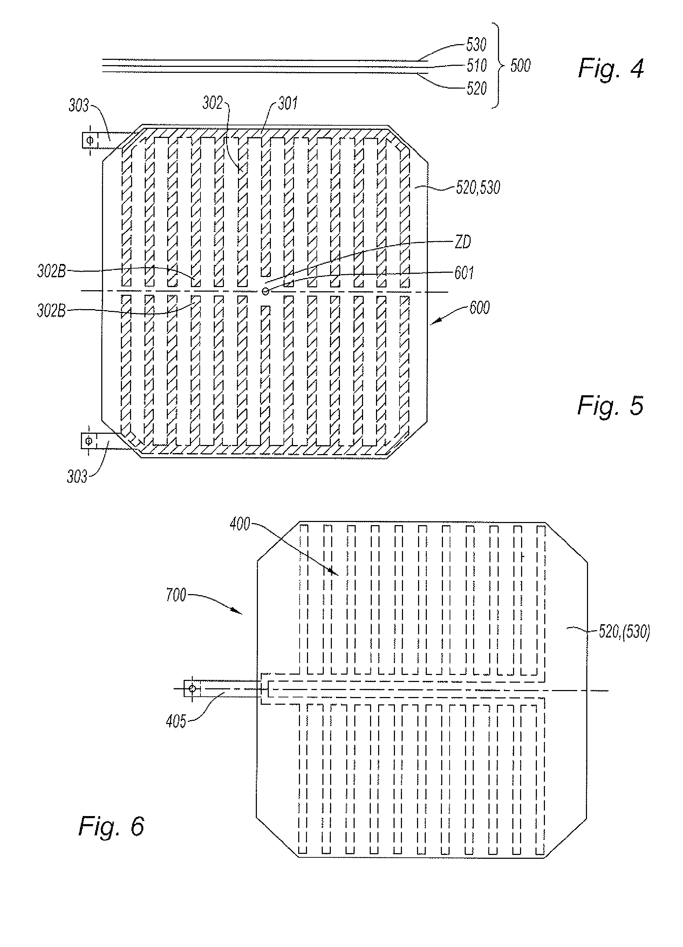

La figure 4 montre en coupe, la réalisation d'un sous-ensemble formant d'un écran électrique 500 comprenant un peigne 510 comme les peignes 300, 400 présentés aux figures 2, 3, muni d'un isolant thermique 520 sur sa face inférieure et d'un isolant électrique 530 sur l'autre face ; le peigne 510 est pris en sandwich entre ces deux isolants 520, 530 ; l'ensemble est assemblé, notamment collé. Ne dépasse de cet ensemble que l'extrémité des pattes de branchement 303 des deux peignes 300 (figure 5) ou la patte unique 405 du peigne 40 (figure 6).

L'isolant électrique 530 est, par exemple, un film en polyimide comme ceux utilisés pour l'isolation de conducteurs électriques, et résistant à une certaine température.

L'isolant thermique 520 qui constitue la face inférieure du sous-ensemble ci-dessus, (selon l'orientation de la figure 1) est, de préférence, un carton réfractaire et notamment un stratifié de papier et de mica, imprégné de silicone. Un tel carton peut présenter une bonne résistance thermique allant jusqu'à 700° et il se découpe facilement.

La figure 5 montre une forme de sous-ensemble d'écran 600 composé de deux peignes jumelés 300 selon la figure 2, dont les dents 302 sont tournées les unes vers les autres et la figure 6, un sous-ensemble d'écran 700 formé d'un peigne 400 de la figure 3.

Dans les deux cas, l'écran électrique a une surface globalement carrée avec des coins tronqués. Dans le cas de la figure 5 et pour le peigne 300 de la figure 2, les coins tronqués 304, 305 font partie de la structure de peigne. Dans le cas de la figure 6 pour le peigne 400 de la figure 3, les sommets du carré de l'écran sont tronqués par nécessité pour être installé dans un foyer comme ci-après.

Le sous-ensemble 600 de l'écran de la figure 5 se compose de deux isolants 520, 530 de contour globalement carré à coins tronqués, entourant le contour de deux peignes 300 (figure 2) disposés symétriquement l'un en regard de l'autre de façon que les extrémités 302B des dents 302 soient en regard mais sans se toucher. Les dents 304 laissent vide l'emplacement ZD muni d'un orifice de fixation 601. Les deux peignes 300 sont pris en sandwich entre les deux isolants 320, 330 et seules les pattes de branchement 303 en dépassent pour être reliées à la masse.

Le sous-ensemble 700 de l'écran de la figure 6 se compose du peigne 400 de la figure 3, pris en sandwich entre deux isolants 520, 530 de forme carrée, à coins tronqués, correspondant au contour du foyer comme à la figure 5. La seule patte 405 dépasse du sous-ensemble 700.

Les figures 5 et 6 montrent que les dos 301, les dents 302, les branches 401, 402, les dents 430, 404 occupent la surface du foyer par une répartition régulière sans créer de boucle de courant.

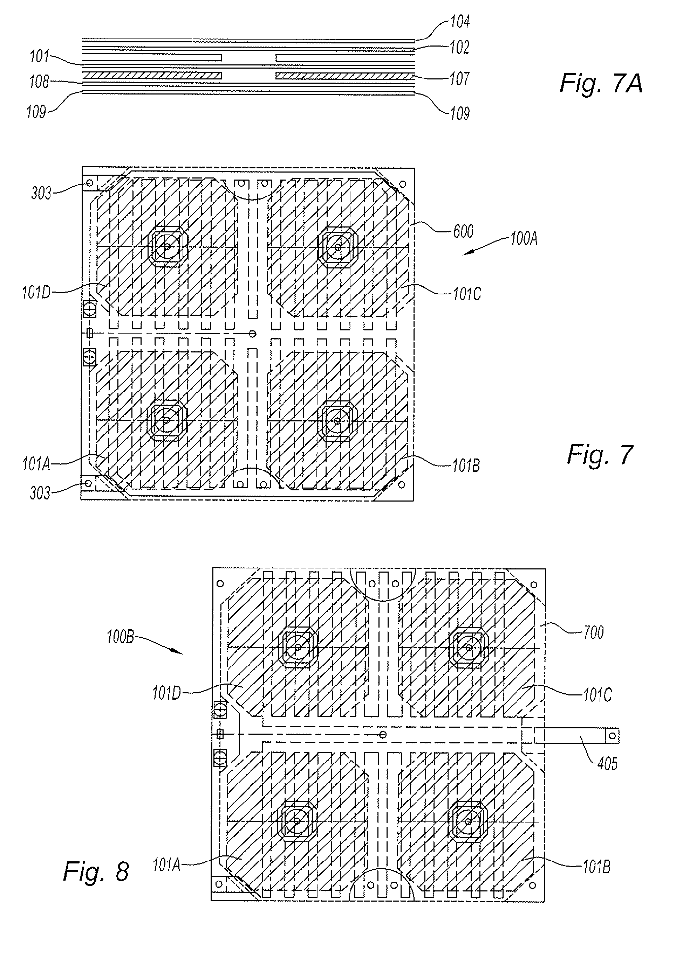

La figure 7 est une vue en plan d'un foyer 100A formé de quatre inducteurs 101A, B, C, D, couverts par un écran 600 tel que celui de la figure 5 dont la figure 7A montre une coupe schématique. La description de cette coupe utilise les mêmes références que la figure 1 pour désigner les mêmes éléments dont la description ne sera pas reprise.

La figure 8 montre une autre forme de foyer 100B, composé également de quatre inducteurs 101A, B, C, D mais couvert par un écran 700 comme celui de la figure 6.

Dans les deux cas, les quatre inducteurs carrés 101A, B, C, D représentent une puissance totale maximale de 4 KW. Ces inducteurs carrés sont placés sur des ferrites de forme correspondante, en étant séparés de celles-ci par un isolant électrique. Les ferrites sont elles-mêmes au-dessus du circuit imprimé, avec interposition d'un autre isolant.

Les inducteurs 101A, B, C, D ont une bobine de forme sensiblement carrée à sommets tronqués que la forme de l'écran électrique 600, 700 épouse et couvre globalement.

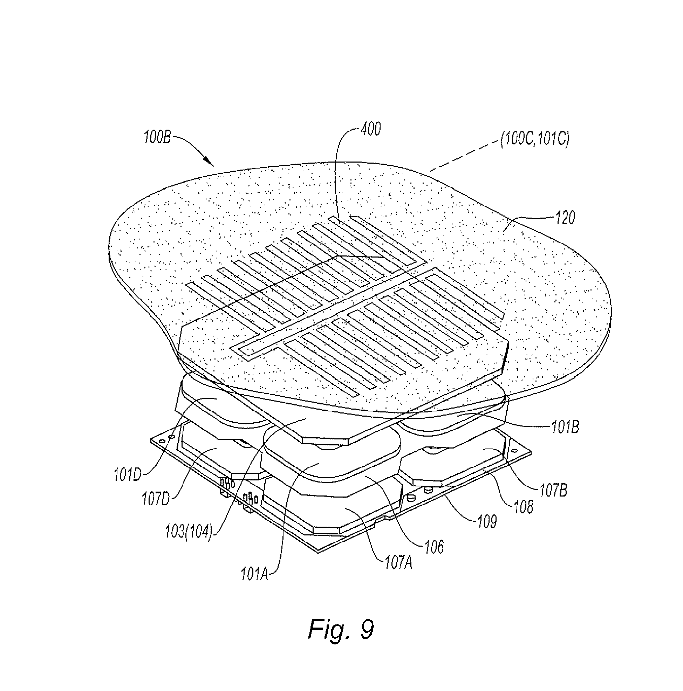

La figure 9 est une vue éclatée d'un appareil de cuisson 100B selon la figure 8. Cet appareil de cuisson se compose d'un circuit imprimé 109 pour l'alimentation des inducteurs 101A, B, C, D. Au-dessus du circuit imprimé, il y a une couche d'isolation électrique 108 surmontée des ferrites 107A, B, C, D, elles-mêmes surmontées des inducteurs 101A, B, C, D avec interposition d'une couche d'isolation électrique 106. Il en est de même des inducteurs qui sont séparés de l'écran électrique , non détaillé ici, par une couche d'isolation 103.

L'écran est représenté par son peigne 400 apparaissant par transparence sous la plaque de cuisson 120 qui est une plaque transparente ou translucide, par exemple une plaque en verre ou en vitrocéramique.

Le peigne 400 de l'écran électrique apparaît à travers la plaque 120 et au-dessus de l'isolant thermique 103, des inducteurs 101A, B, C, D et des ferrites 107A, B, C, D ainsi que de la plaque de circuit 109.

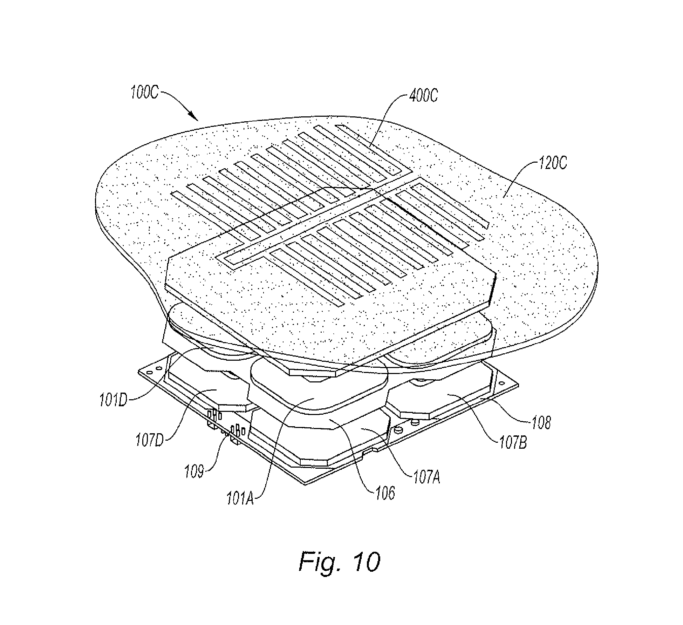

La figure 10 montre un autre mode de réalisation de l'appareil de cuisson 100C dans lequel l'écran électrique se trouve à la surface de la plaque de cuisson. Cet écran est limité à un peigne 40C soit incrusté dans la plaque de cuisson 120C, intégré dans l'épaisseur de celle-ci ou incrusté dans celle-ci en surface. Il s'agit de préférence d'un écran en carbone incrusté assurant alors une double fonction puisqu'il constitue à la fois la seconde plaque du condensateur qu'il forme avec l'inducteur et d'autre part étant relié à la masse, en reliant à la masse, l'ustensile de cuisine placé au-dessus de lui.

L'écran en carbone est imprimé sur la face inférieure de la plaque 120C ou sur la face supérieure de celle-ci. Il peut s'agir d'une peinture au carbone, appliquée par sérigraphie.

Dans tous les cas, l'écran doit résister aux températures relativement élevées auxquelles il peut être soumis du fait de sa proximité avec l'ustensile de cuisson qui sera chauffé.

Les autres éléments de l'appareil 100, identique au mode de réalisation de la figure 9, ne seront pas décrits à nouveau.

## Revendications

1. Appareil de cuisson par induction à au moins un foyer, le foyer comprenant
- une surface de cuisson formée par une plaque recevant le récipient
- au moins un inducteur installé sous la plaque,
- un générateur alimentant l'inducteur en courant alternatif à haute fréquence,
- un écran électroconducteur non magnétique, interposé entre l'inducteur et la surface de cuisson,
**caractérisé en ce que**
- l'inducteur est de forme sensiblement carrée à sommets tronqués et
- l'écran électrique, électroconducteur, non magnétique est une structure digitée en peigne ayant un dos (301, 401, 402) en forme de ruban portant des dents (302, 403, 404 formant des rubans parallèles, dont les extrémités sont libres et non reliées en boucle, cette structure couvrant et épousant globalement la surface de forme sensiblement carrée à sommets tronqués (101) de l'inducteur selon une répartition régulière, et le dos (301) est relié à une patte (105) pour le branchement à la masse électrique (110) de la plaque de cuisson (100).

2. Appareil de cuisson à induction selon la revendication 1,
**caractérisé en ce que**
les dents (302, 403, 404) sont de même longueur sauf l'une des dents (304) laissant une partie dégagée (ZD).

3. Appareil de cuisson à induction selon la revendication 1,
**caractérisé en ce que**
les dents (301, 401, 302, 402, 403, 404) en forme de ruban, ont une épaisseur identique.

4. Appareil de cuisson à induction selon la revendication 1,
**caractérisé en ce que**
les coins (305) de l'écran aux deux extrémités du dos (301) et des branches sont tronqués pour s'adapter à la forme du foyer.

5. Appareil de cuisson par induction selon la revendication 1,
**caractérisé en ce que**
l'écran électrique (400, 700), de forme globalement carrée, est composé de deux peignes jumelés par leurs dos, parallèles (401, 402), et dont une extrémité est reliée à une patte commune (405), mise à la masse, les dents (403, 404) des peignes étant dirigées dans des directions opposées.

6. Appareil de cuisson par induction selon la revendication 1,
**caractérisé en ce que**
l'écran électrique (300, 600), de forme globalement carrée, est composé de deux peignes jumelés (300) dont les extrémités (302B) des dents (302) sont tournées les unes vers les autres, sans contact et le dos (301) de chaque peigne (300) comporte une patte (303) reliée séparément à la masse (110).

7. Appareil de cuisson par induction selon la revendication 1,
**caractérisé en ce qu'**
il compote un sous-ensemble collé, composé d'un écran électrique (510) appliqué sur un isolant thermique (520) et couvert d'un isolant électrique (530) de contour globalement carré dont les sommets sont tronqués.

8. Appareil de cuisson par induction selon la revendication 7,
**caractérisé en ce que**
l'isolant thermique est un carton réfractaire, notamment un stratifié de papier et de mica, imprégné de silicone.

9. Appareil de cuisson par induction selon la revendication 1,
**caractérisé en ce que**
la structure digitée en forme de peigne (300, 400) de l'écran électrique est en aluminium, notamment d'une épaisseur de 150 microns.

10. Appareil de cuisson par induction selon la revendication 1,
**caractérisé en ce que**
la structure digitée en forme de peigne (300, 400) de l'écran électrique est en carbone, notamment déposé par sérigraphie.

11. Appareil de cuisson par induction selon la revendication 1,
**caractérisé en ce qu'**
il comprend un ensemble de quatre inducteurs carrés (101A, B, C, D) combinés à des ferrites (107A, B, C, D) et surmontés d'un écran électrique commun, par interposition d'un isolant thermique et d'un écran électrique.
